# DEMANDE DE BREVET EUROPEEN

(11) **EP 4 821 341 A1**
(43) Date de publication de la demande: **14.10.2026**
(21) Numéro de dépôt: 26170770.7
(22) Date de dépôt: 03.04.2026
(51) Int. Cl.: A01D 34/43, A01D 34/535

(54) **DISPOSITIF DE FAUCHAGE OU DE BROYAGE AVEC UN COUPLE D'OUTILS, CHAQUE OUTIL COMPRENANT UN MOYEN D'ALIGNEMENTDISPOSITIF DE FAUCHAGE OU DE BROYAGE AVEC UN COUPLE D'OUTILS, CHAQUE OUTIL COMPRENANT UN MOYEN D'ALIGNEMENT**

(30) Priorité: 08.04.2025 FR 2503740
(71) Demandeur: Noremat, 54710 Ludres (FR)
(72) Inventeur: EUDES, Frédéric, 88000 Epinal (FR); BERNE, Stéphane, 54116 Tantonville (FR)
(74) Mandataire: Loyer & Abello

(57) **Abrégé**

[L'invention concerne un dispositif de fauchage ou de broyage comportant un couple d'outils (1) de fauchage ou de broyage monté directement ou indirectement sur l'arbre rotatif au moyen d'au moins une liaison articulée, dans lequel le couple d'outil (1) de fauchage ou de broyage est configuré pour se positionner dans une position de travail sous l'effet d'une force centrifuge, chaque outil (2) de fauchage ou de broyage dudit couple présentant une surface avant et une surface arrière, la surface arrière comprenant au moins un connecteur (25, 26), dans lequel le couple d'outils de fauchage ou de broyage coopère au niveau de la surface arrière des outils de fauchage ou de broyage dans la position de travail, de sorte que les connecteurs (25, 26) dudit couple d'outils (1) de fauchage ou de broyage coopèrent pour aligner le couple d'outils de fauchage ou de broyage.

## Description

### Domaine technique

L'invention se rapporte au domaine des dispositifs de fauchage ou de broyage.

De tels dispositifs de fauchage ou de broyage équipent notamment des machines pour la coupe et/ou le broyage des végétaux telles que les faucheuses rotatives utilisées pour la coupe des cultures, les épareuses utilisées pour l'entretien des espaces verts ou des accotements routiers.

### Arrière-plan technologique

On connaît des dispositifs de fauchage ou de broyage comportant un arbre rotatif portant des outils travaillant à la manière de fléaux au cours de la rotation de l'arbre. L'arbre rotatif est équipé des chapes positionnées perpendiculairement à son axe et portant des supports axiaux, disposés parallèlement à l'axe de l'arbre rotatif, et supportant les outils. Les outils peuvent être directement montés sur les supports axiaux. Dans ce cas, les outils sont chacun équipés d'un orifice de montage au travers duquel passe un des supports axiaux. Les outils peuvent également être montés sur les supports axiaux par l'intermédiaire de manilles. Dans ce cas, chaque manille comporte, d'une part, des orifices de montage au travers desquelles passe un support axial porté par des chapes solidaires de l'arbre rotatif et, d'autre part, un support axial passant au travers d'un orifice de montage de l'outil. Ces montages sont réalisés de manière que les outils et les manilles puissent tourner par rapport aux supports axiaux.

Ainsi, d'une part, lorsque l'arbre rotatif est entraîné en rotation, l'outil est apte à se disposer dans une position de travail dans laquelle il s'étend radialement par rapport à l'arbre rotatif sous l'action de la force centrifuge. D'autre part, les outils peuvent s'escamoter par la rotation de la manille et/ou la rotation de l'outil de sorte à s'écarter de leur position de travail lorsqu'ils entrent en contact avec des obstacles qu'ils ne peuvent couper ou broyer. Un tel dispositif de fauchage est notamment décrit dans la publication FR-A-2 944 182, dans laquelle chaque support axial porte un couple d'outils.

### Résumé

Une idée à la base de l'invention est de proposer un dispositif de fauchage ou de broyage qui permette de garantir un retour facile et rapide de la position de travail de couples d'outils montés sur les supports axiaux dans le cas où les outils qui composent un couple d'outils s'écarteraient l'un de l'autre. Certains aspects de l'invention partent de l'idée de proposer un dispositif de fauchage ou de broyage qui présente une résistance à l'usure satisfaisante.

Selon un mode de réalisation, l'invention fournit un dispositif de fauchage ou de broyage comportant un arbre rotatif mobile en rotation autour d'un axe et portant au moins un couple d'outils de fauchage ou de broyage, chaque outil de fauchage ou de broyage dudit couple étant monté directement ou indirectement sur l'arbre rotatif au moyen d'au moins une liaison articulée comportant au moins un orifice de montage défini par un bord périphérique et un support axial passant au travers de l'orifice de montage, l'orifice de montage présentant une section supérieure à une section du support axial de sorte à autoriser un pivotement de l'orifice de montage autour du support axial, dans lequel le couple d'outil de fauchage ou de broyage est configuré pour se positionner dans une position de travail sous l'effet d'une force centrifuge générée par la rotation autour de l'axe, le couple d'outils de fauchage ou de broyage dans la position de travail s'étendant radialement et étant écarté de l'arbre rotatif, chaque outil de fauchage ou de broyage dudit couple présentant une surface avant et une surface arrière, la surface arrière comprenant au moins un connecteur, dans lequel le couple d'outils de fauchage ou de broyage coopère au niveau de la surface arrière des outils de fauchage ou de broyage dans la position de travail, de sorte que les connecteurs dudit couple d'outils de fauchage ou de broyage coopèrent pour aligner le couple d'outils de fauchage ou de broyage.

Grâce à ces caractéristiques, les outils du couple d'outils restent dans une position alignée de manière stable, les connecteurs de chaque outil coopérant ensemble pour maintenir la position alignée lorsque l'arbre rotatif du dispositif est actionné.

Les connecteurs des outils de fauchage ou de broyage peuvent être réalisés de différentes manières. Selon un mode de réalisation, ledit au moins un connecteur d'un outil de fauchage ou de broyage dudit couple est un connecteur mâle, ledit au moins un connecteur de l'autre outil de fauchage ou de broyage dudit couple est un connecteur femelle, ledit au moins un connecteur mâle coopérant avec ledit au moins connecteur femelle. Selon un mode de réalisation, ledit au moins un connecteur de chaque outil de fauchage ou de broyage dudit couple comprend un aimant, l'aimant d'un outil étant attiré par l'aimant de l'autre outil.

En variante, la surface arrière de chaque outil de fauchage ou de broyage dudit couple comprend un connecteur mâle et un connecteur femelle, les connecteurs mâle et femelle d'un outil de fauchage ou de broyage coopérant respectivement avec les connecteurs femelle et mâle de l'autre outil de fauchage ou de broyage dudit couple d'outils de fauchage ou de broyage dans la position de travail.

Selon un mode de réalisation, le connecteur mâle est en saillie de la surface arrière et le connecteur femelle forme un renfoncement dans la surface arrière.

Selon un mode de réalisation, les connecteurs mâle et femelle sont positionnés symétriquement de part et d'autre par rapport à un axe longitudinal qui partage l'outil de fauchage ou de broyage en deux parties de même dimension, l'axe longitudinal de l'outil de fauchage ou de broyage étant destiné à s'orienter dans une direction radiale de l'arbre rotatif dans la position de travail.

Selon un mode de réalisation, les connecteurs mâle et femelle ont une forme oblongue, la surface du connecteur mâle étant convexe et la surface du connecteur femelle étant concave, les connecteurs mâle et femelles étant orientés selon un axe longitudinal de l'outil de fauchage ou de broyage, destiné à s'orienter dans une direction radiale de l'arbre rotatif dans la position de travail. Ainsi, le maintien de la position alignée des outils du couple d'outils est amélioré.

Selon un mode de réalisation, les connecteurs mâle et femelle présentent une surface lisse.

Selon un mode de réalisation, chaque outil de fauchage ou de broyage dudit couple d'outils de fauchage est monté sur l'arbre par l'intermédiaire d'une manille et de deux liaisons articulées et la manille est liée à chaque outil de fauchage ou de broyage par l'une des deux liaisons articulées et à l'arbre rotatif par l'intermédiaire de l'autre des deux liaisons articulées.

Selon un mode de réalisation, ledit couple d'outils de fauchage ou de broyage est directement monté sur l'arbre rotatif au moyen de la liaison articulée.

Selon un mode de réalisation, chaque outil de fauchage ou de broyage dudit couple d'outils de fauchage ou de broyage comprend ledit orifice de montage de la liaison articulée.

Selon un mode de réalisation, chaque outil de fauchage ou de broyage dudit couple d'outils de fauchage ou de broyage comprend une partie de réception comprenant l'orifice de montage et ledit au moins un connecteur et une partie travaillante comprenant une portion coupante, la partie travaillante étant espacée de la partie de réception selon l'axe longitudinal de l'outil de fauchage ou de broyage.

Selon un mode de réalisation, la partie travaillante comprend une portion courbée de manière à s'éloigner de l'autre outil de fauchage ou de broyage dudit couple d'outil de fauchage ou de broyage, de sorte que ledit couple d'outils de fauchage ou de broyage présente une forme en Y.

Selon un mode de réalisation, la surface arrière de chaque outil de fauchage ou de broyage dudit couple d'outils de fauchage ou de broyage comprend une partie creuse s'étendant de l'orifice de montage jusqu'à un bord interne de la portion coupante.

Selon un mode de réalisation, la surface avant de chaque outil de fauchage ou de broyage dudit couple d'outils de fauchage ou de broyage comprend un témoin d'usure pour indiquer l'usure de l'outil de fauchage ou de broyage, ledit un témoin d'usure étant positionné proche de la portion coupante.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La figure 1 est une vue de côté d'un couple d'outils de fauchage ou de broyage dans une position de travail et d'une liaison articulée destiné à relier le couple d'outils à un arbre rotatif.
La figure 2 est une vue en perspective de la surface avant d'un outil de fauchage ou de broyage selon un mode de réalisation.
La figure 3 est une vue en perspective de la surface arrière de l'outil de fauchage ou de broyage de la Fig. 2.
La figure 4 est une vue de face de la surface avant de l'outil de fauchage ou de broyage de la Fig. 2 dans un état partiellement usé.
La figure 5 est une vue de face du couple d'outils de fauchage ou de broyage de la Fig. 1 dans une première position escamotée.
La figure 6 est une vue analogue à la fig. 5 montrant le couple d'outils de fauchage ou de broyage dans une deuxième position escamotée.

### Description des modes de réalisation

Par convention, l'orientation "radiale" est dirigée orthogonalement à l'axe X de rotation de l'arbre rotatif en s'éloignant dudit axe X.

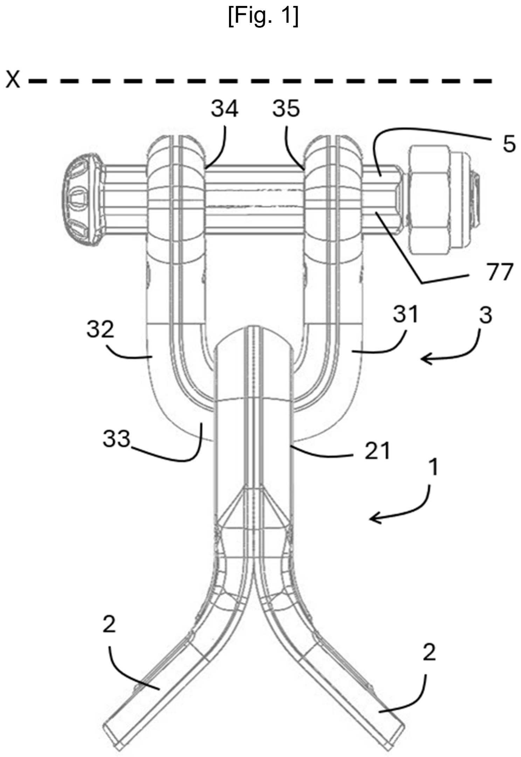

En référence aux Figs. 1 à 6, on va maintenant décrire un dispositif de fauchage ou de broyage qui comporte une pluralité de couples d'outils 1 formés chacun de deux outils de fauchage ou de broyage 2, qui sont solidarisés à un arbre rotatif généralement creux, non représenté, qui est symbolisé par l'axe de rotation X sur la Fig. 1. L'arbre rotatif peut être monté en rotation sur une machine de coupe ou de broyage, selon l'axe de rotation X qui peut être horizontal, vertical ou oblique. Un seul couple d'outils 1 est représenté sur les figures 1, 5 et 6.

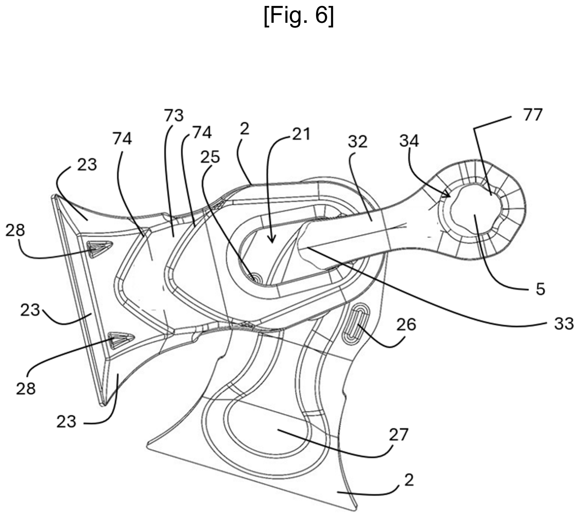

Le couple d'outils 1 est monté articulé sur l'arbre rotatif soit par l'intermédiaire d'une manille 3 représentée sur les Fig. 1 et 6, soit directement sur le support axial 5 (montage en omettant la manille 3). Le couple d'outils 1 est monté articulé par rapport à l'arbre rotatif de sorte à être apte, d'une part, à se positionner sous l'effet de la force centrifuge engendré par la rotation de l'arbre rotatif dans une position de travail dans laquelle il s'étend radialement par rapport à l'arbre rotatif et, d'autre part, à s'escamoter en s'écartant de sa position de travail lorsque le couple d'outils 1 rencontre un obstacle accidentel.

La figure 1 représente le couple d'outils 1 qui comprend deux outils 2. Les deux outils 2 sont identiques et sont portés par la manille 3. La manille comporte deux branches 31, 32 qui sont chacune solidarisées à l'une des extrémités du support axial 33 et qui s'étendent de part et d'autre des outils 2. Chacune des branches 31, 32 comporte un orifice de montage 34, 35 au travers duquel passe un support axial 5 fixé à l'arbre rotatif. Le support axial 5 s'étend parallèlement à l'axe de rotation X de l'arbre rotatif et peut être porté par deux supports connus non représentés, par exemple des chapes, qui sont fixés à l'arbre rotatif.

Les deux outils 2 comportent également chacun un orifice de montage 21 au travers duquel passe le support axial 33 de la manille 3. Le support axial 33 de la manille 3 s'étend parallèlement au support axial 5 et parallèlement à l'axe de rotation X de l'arbre rotatif.

Chaque support axial 5 ou 33 peut constituer, avec les orifices de montages 21 ou 34, 35 dans lequel il passe, une liaison articulée créant une précontrainte favorisant le maintien des 'outils 2 dans sa position de travail. De plus, l'orifice de montage 21 ou 34, 35 présente une section supérieure à celle du support axial 5 ou 33 correspondant de sorte à autoriser un pivotement de l'orifice de montage 21 ou 34, 35 autour du support axial 5 ou 33 correspondant. Ceci permet au couple d'outils 1 de s'escamoter par rapport à sa position de travail lorsqu'il rencontre un obstacle accidentel, tel qu'une végétation trop dense, une pierre, une souche ou une branche trop épaisse, qui génère un effort suffisant sur l'outil 1 pour le déséquilibrer hors de sa position de travail

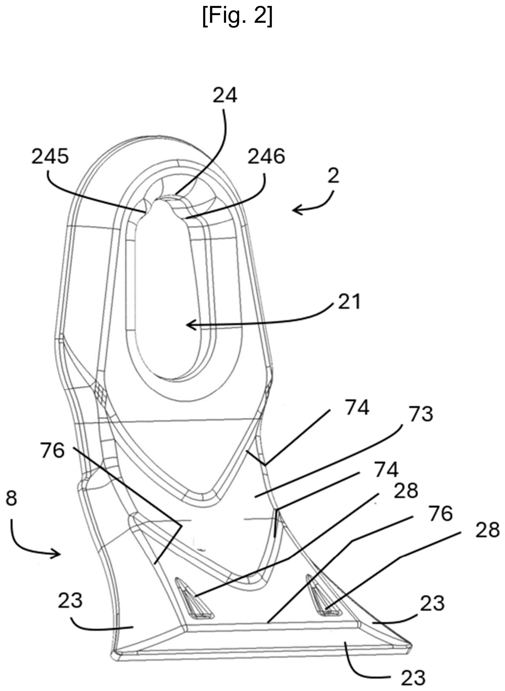

La figure 2 représente la surface avant d'un outil 2 du couple d'outil 1. L'orifice de montage 21 est défini par un bord périphérique 24 qui présente une portion radialement interne présentant deux bossages 245, 246. Lorsque l'outil 2 est dans sa position de travail, le bord périphérique 24 de l'orifice de montage 21 et le support axial 5 ou 33 avec lequel il forme la liaison articulée sont en contact l'un contre l'autre exclusivement par l'intermédiaire des deux bossages 245, 246 et des cannelures 77 du support axial 5 ou 33.

L'outil 2 comporte un couteau qui constitue une partie travaillante 8 munie de portions biseautées 23 permettant de couper ou de broyer des végétaux. Les portions biseautées sont situées à une extrémité extérieure de l'outil, à l'opposé du bord périphérique 24 de l'orifice de montage 21.

Entre l'orifice de montage 21 et la partie travaillante 8, la surface avant présente une zone en dépression 73 délimitée par deux arêtes 74 en forme de chevron. Cette structure contribue à augmenter la rigidité de l'outil 2 sans accroitre son poids et permet d'obtenir un fléau large sans ajout de matière.

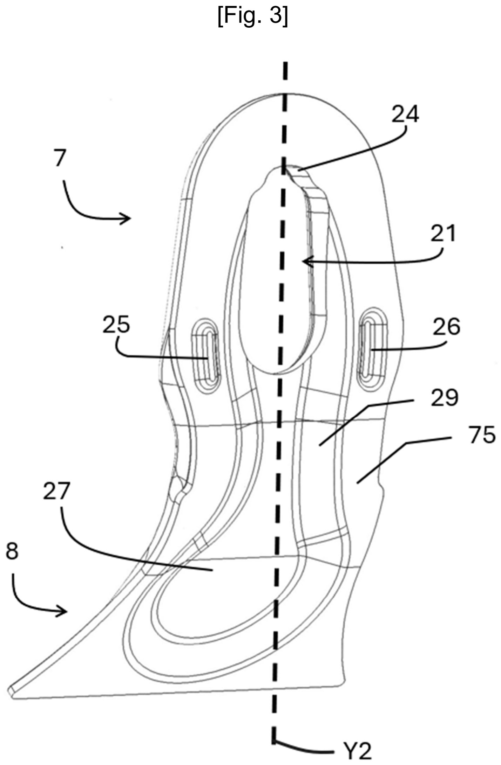

La figure 3 représente la surface arrière de l'outil 2. La surface arrière comprend un ergot 25 et un renfoncement 26. L'ergot 25 et le renfoncement 26 sont disposés symétriquement de part et d'autre par rapport à un axe longitudinal Y2. L'axe longitudinal Y2 partage en deux parties l'outil 2, les deux parties ayant la même dimension. Autrement dit, le seul élément qui distingue une partie par à rapport à l'autre est la présence de l'ergot 25 dans une partie et la présence du renfoncement 26 dans l'autre. L'axe longitudinal Y2 s'aligne dans la direction radiale dans la position de travail de l'outil 2.

L'ergot 25 est en saillie sur la surface arrière de l'outil 2 et allongé parallèlement à l'axe longitudinal Y2. Le renfoncement 26 est également allongé parallèlement à l'axe longitudinal Y2. L'ergot 25 est destiné à s'insérer dans le renfoncement 26 d'un autre outil 2 identique. La forme du renfoncement 26 est donc complémentaire à celle de l'ergot 25. En lien avec la figure 1, lorsque le couple d'outils 1 est dans la position de travail, l'ergot 25 de chaque outil 2 est inséré dans le renfoncement de l'autre outil 2. Dans cette configuration, le couple d'outils 1 garde de manière stable une position mutuellement alignée, ce qui favorise la stabilité de la position de travail et donc l'efficacité d'utilisation du dispositif de fauchage ou de broyage.

. L'outil 2 présente deux parties principales. La partie qui comprend l'orifice de montage 21, l'ergot 25 et le renfoncement 26 constitue une partie de réception 7. Plus loin le long de l'axe longitudinal Y2 se trouve la partie travaillante 8, destinée à être tournée radialement vers l'extérieur dans la position de travail. La partie travaillante 8 présente une forme courbée de façon que le couple d'outils 1 présente une forme en Y visible sur la Fig. 1.

La zone autour de l'orifice de montage 21 dans la partie de réception 7 peut présenter une épaisseur supérieure par rapport à l'épaisseur de l'outil en dehors de cette zone. Ainsi, il présente une meilleure résistance aux efforts auxquels il est soumis lorsqu'il est dans la position de travail, notamment la force exercée par le bord périphérique 24 de l'orifice de montage 21 de l'outil 2 sur le support axial 33 de la manille 3 avec lequel il forme une liaison articulée, l'outil 2 s'étendant radialement par rapport à l'arbre rotatif sous l'action de la force centrifuge.

La surface arrière comprend également une partie centrale creuse 27 qui démarre du bord de l'orifice de montage 21 tourné vers la partie travaillante 8 et s'étend jusqu'à l'envers des arêtes de sommet 76 des portions biseautées 23 de l'outil 2. La surface arrière présente une zone intermédiaire 29 qui relie la partie centrale creuse 27 à la portion périphérique 75 de la surface arrière. La zone intermédiaire 29 est inclinée et présente une surface lisse et arrondie pour éviter les concentrations de contraintes qui favoriseraient les amorces de fissures. Cette partie centrale creuse 27 allège le poids de l'outil 2.

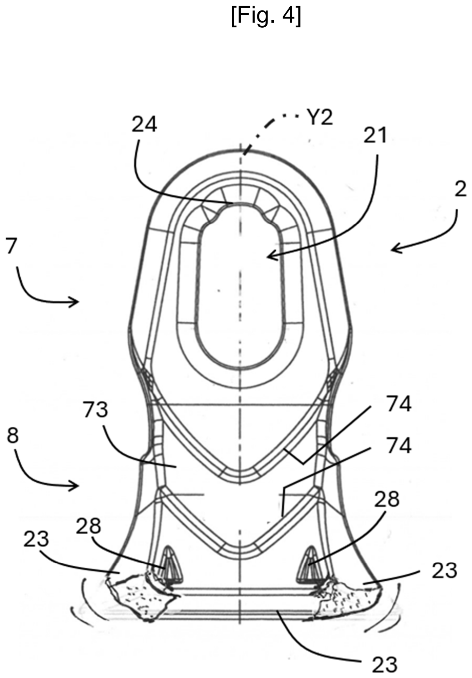

La figure 4 présente un outil 2 dans lequel une partie des portions biseautées 23 sont usées. En effet, l'utilisation de l'outil 2 dans la durée use la partie travaillante 8. Plus précisément, les portions biseautées 23 s'érodent à mesure que l'outil 2 est utilisé. Pour mesurer cette usure de l'outil 2, il peut être prévu sur la surface avant des témoins d'usures 28 positionnés proche des arêtes de sommet 76 des portions biseautées 23. Ils peuvent comprendre des motifs en saillies de la surface avant. Ainsi, lorsque l'érosion des portions biseautées 23 atteint les témoins d'usure 28, le ou les motifs en saillies vont également s'éroder donnant une indication directement visible sur la surface avant de l'état de l'outil 2. Avantageusement les témoins d'usure 28 sont disposés symétriquement par rapport à l'axe Y2.

Grâce à la partie creuse 27 de la surface arrière, la durée dans laquelle l'outil 2 peut être utilisé est allongée. En effet, même dans un état très avancé d'érosion des portions biseautées 23, la portion restante de la partie travaillante 8 sera localisée à l'aplomb de la partie creuse 27. Or l'épaisseur de l'outil 2 au niveau de la partie creuse 27 est rendue suffisamment fine pour être tranchante.

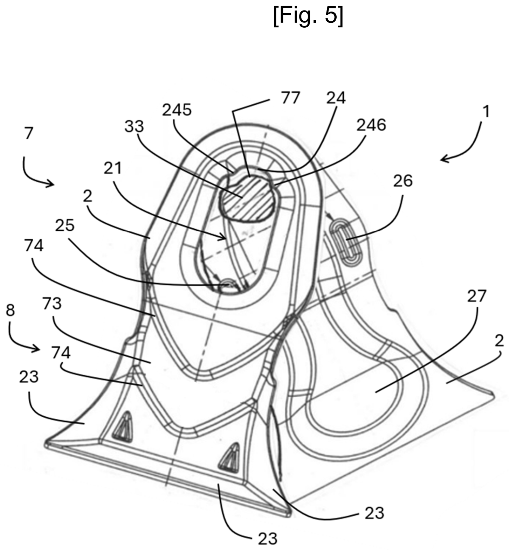

En relation avec la figure 5, lorsque les outils 2 rencontrent un obstacle, par exemple une végétation trop dense, une pierre, une souche ou une branche trop épaisse, celui-ci exerce sur les outils 2un effort qui peut être suffisant pour déséquilibrer les outils 2hors de leur position de travail et entraîner un escamotage des outils 2. En d'autres termes, les outils 2 peuvent pivoter autour du support axial 33 de la manille 3. Toutefois les obstacles n'agissent pas identiquement sur les deux outils 2 du couple d'outils 1, ce qui peut provoquer le décalage d'un outil 2 du couple d'outils 1 par rapport à l'autre, comme montré sur la Fig. 5.

Plus précisément, les outils 2 du couple d'outils 1 pivotent différemment autour du support axial de la manille 3 et s'écartent donc l'une de l'autre. Pour qu'un tel décalage mutuel se produise, il faut cependant que la coopération entre les ergots 25 et les renfoncements 26 de chacun des deux outils 2 soit rompue. On comprend donc que les ergots 25 et les renfoncements 26 tendent à stabiliser le couple d'outils 1 en ancrant les deux outils 2 l'un à l'autre et en s'opposant à leur décalage mutuel. Un escamotage commun du couple d'outils 1 est donc favorisé par rapport à l'escamotage d'un seul outil 2.

Plus généralement, que le couple d'outils 1 soit ou non dans la position de travail, les deux outils 2 montés ensemble sur le support axial 33 coopèrent par les renfoncements 26 et les ergots 25 sur leur surface arrière dans une position alignée du couple d'outil 1. La position alignée est de plus caractérisée par un contact de la surface arrière de toute la partie de réception 7 des deux outils 2 ce qui limite la possibilité pour des végétaux de se glisser entre les deux outils 2.

Pour cela, l'utilisation de deux les ergots 25 et les renfoncements 26 est préférée mais non nécessaire. Dans une variante de réalisation, un outil 2 comporte l'ergot 25 uniquement et l'autre outil 2 comporte le renfoncements 26 uniquement.

Pour faciliter le retour du couple d'outils 1 dans la position alignée stable après un décalage mutuel, il est de plus prévu que les ergots 25 et les renfoncements 26 de chacun des deux outils 2 présente une surface lisse, c'est-à-dire que la surface ne présente pas d'aspérités au toucher. Grâce à cette caractéristique, le retour du couple d'outils 1 dans la position alignée stable après un décalage mutuel et/ou le retour du couple d'outils 1 vers la position de travail après l'escamotage est à la fois rapide et facile.

L'association du couple d'outils 1 à l'arbre rotatif par l'intermédiaire de la manille 3 permet un double escamotage illustré par la Fig. 6. Le couple d'outil 1 est susceptible de pivoter autour du support axial 33 de la manille 3 et la manille 3 est également susceptible de pivoter autour du support axial 5 porté par l'arbre rotatif. Le dispositif de fauchage ou de broyage est flexible lors de son utilisation dans le cas où le couple d'outils 1 rencontre un obstacle et présente également une bonne surface de travail grâce à l'utilisation d'un couple d'outils qui a une surface de travail plus importante que la configuration où le dispositif de fauchage ou de broyage comporte un seul outil 2 monté sur le support axial 33.

De manière analogue à l'orifice de montage 21 de chaque outil 2, chaque orifice de montage 34, 35 de la manille 3 présente également un bord périphérique qui présente une portion radialement interne présentant deux bossages destinés à coopérer avec les cannelures 77. Lorsque l'outil 2 est dans sa position de travail, le bord périphérique 24 de l'orifice de montage 21 et un support axial 5 avec lequel il forme la liaison articulée sont en contact l'un contre l'autre exclusivement par l'intermédiaire des deux bossages et des cannelures 77. Grâce à la présence des deux bossages, des efforts de frottement s'exercent entre le bord périphérique de chaque orifice de montage 34, 35 et le support axial 5 en deux points qui s'opposent à l'oscillation de la manille autour de sa position de travail. La position de travail étant plus stable, la manille 3 retrouve plus rapidement sa position de travail après un escamotage.

Toutefois, dans un mode réalisation non illustré, le couple d'outils 1 est solidarisé directement au support axial 5 porté par l'arbre rotatif, c'est-à-dire sans l'aide d'une manille 3. Le support axial 5 sert alors de support au couple d'outils 1 et est par conséquent introduit à travers l'orifice de montage 21 de chaque outil 2 du couple d'outils 1.

Dans d'autres modes de réalisation non représentés, il peut être envisagé d'inverser la structure des éléments de telle sorte que, d'une part, le couple d'outils comporte un support axial et non un orifice de montage, et que l'élément de liaison porté par l'arbre rotatif présente un orifice de montage et non un support axial.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif de fauchage ou de broyage comportant un arbre rotatif mobile en rotation autour d'un axe (X) et portant au moins un couple d'outils (1) de fauchage ou de broyage, chaque outil de fauchage (2) ou de broyage dudit couple étant monté directement ou indirectement sur l'arbre rotatif au moyen d'au moins une liaison articulée comportant au moins un orifice de montage (21, 34, 35) défini par un bord périphérique (24) et un support axial (5, 33) passant au travers de l'orifice de montage (21, 34, 35), l'orifice de montage présentant une section supérieure à une section du support axial (5, 33) de sorte à autoriser un pivotement de l'orifice de montage autour du support axial, dans lequel le couple d'outil (1) de fauchage ou de broyage est configuré pour se positionner dans une position de travail sous l'effet d'une force centrifuge générée par la rotation autour de l'axe, le couple d'outils de fauchage ou de broyage dans la position de travail s'étendant radialement et étant écarté de l'arbre rotatif, chaque outil (2) de fauchage ou de broyage dudit couple présentant une surface avant et une surface arrière, la surface arrière comprenant au moins un connecteur (25, 26), dans lequel le couple d'outils de fauchage ou de broyage coopère au niveau de la surface arrière des outils de fauchage ou de broyage dans la position de travail, de sorte que les connecteurs (25, 26) dudit couple d'outils (1) de fauchage ou de broyage coopèrent pour aligner le couple d'outils de fauchage ou de broyage.

2. Dispositif de fauchage ou de broyage selon la revendication 1, dans lequel la surface arrière de chaque outil (2) de fauchage ou de broyage dudit couple (1) comprend un connecteur mâle (25) et un connecteur femelle (26), les connecteurs mâle (25) et femelle (26) d'un outil de fauchage ou de broyage coopérant respectivement avec les connecteurs femelle (26) et mâle (25) de l'autre outil (2) de fauchage ou de broyage dudit couple d'outils de fauchage ou de broyage dans la position de travail.

3. Dispositif de fauchage ou de broyage selon la revendication 2, dans lequel le connecteur mâle (25) est en saillie de la surface arrière et le connecteur femelle (26) forme un renfoncement dans la surface arrière.

4. Dispositif de fauchage ou de broyage selon la revendication 2 ou 3, dans lequel les connecteurs mâle (25) et femelle (26) sont positionnés symétriquement de part et d'autre par rapport à un axe longitudinal (Y2) qui partage l'outil (2) de fauchage ou de broyage en deux parties de même dimension, l'axe longitudinal de l'outil de fauchage ou de broyage étant destiné à s'orienter dans une direction radiale de l'arbre rotatif dans la position de travail.

5. Dispositif de fauchage ou de broyage selon l'une quelconque des revendications 2 à 4, dans lequel les connecteurs mâle (25) et femelle (26) ont une forme oblongue, la surface du connecteur mâle étant convexe et la surface du connecteur femelle étant concave, les connecteurs mâle et femelles étant orientés selon un axe longitudinal de l'outil de fauchage ou de broyage, destiné à s'orienter dans une direction radiale de l'arbre rotatif dans la position de travail.

6. Dispositif de fauchage ou de broyage selon l'une quelconque des revendications 2 à 5, dans lequel les connecteurs mâle (25) et femelle (26) présentent une surface lisse.

7. Dispositif de fauchage ou de broyage selon l'une quelconque des revendications 1 à 6, dans lequel chaque outil (2) de fauchage ou de broyage dudit couple (1) d'outils de fauchage est monté sur l'arbre par l'intermédiaire d'une manille (3) et de deux liaisons articulées et la manille (3) est liée à chaque outil de fauchage ou de broyage par l'une des deux liaisons articulées et à l'arbre rotatif par l'intermédiaire de l'autre des deux liaisons articulées.

8. Dispositif de fauchage ou de broyage selon l'une quelconque des revendications 1 à 7, dans lequel ledit couple d'outils (1) de fauchage ou de broyage est directement monté sur l'arbre rotatif au moyen de la liaison articulée.

9. Dispositif de fauchage ou de broyage selon l'une quelconque des revendications 1 à 8, dans lequel chaque outil (2) de fauchage ou de broyage dudit couple d'outils (1) de fauchage ou de broyage comprend ledit orifice de montage (21) de la liaison articulée.

10. Dispositif de fauchage ou de broyage selon la revendication 9, dans lequel chaque outil (2) de fauchage ou de broyage dudit couple (1) d'outils de fauchage ou de broyage comprend une partie de réception (7) comprenant l'orifice de montage (21) et ledit au moins un connecteur et une partie travaillante (8) comprenant une portion coupante, la partie travaillante (8) étant espacée de la partie de réception (7) selon l'axe longitudinal (Y2) de l'outil de fauchage ou de broyage.

11. Dispositif de fauchage ou de broyage selon la revendication 10, dans lequel la partie travaillante (8) comprend une portion courbée de manière à s'éloigner de l'autre outil (2) de fauchage ou de broyage dudit couple d'outil (1) de fauchage ou de broyage, de sorte que ledit couple d'outils de fauchage ou de broyage présente une forme en Y.

12. Dispositif de fauchage ou de broyage selon la revendication 10 ou 11, dans lequel la surface arrière de chaque outil de fauchage ou de broyage dudit couple d'outils de fauchage ou de broyage comprend une partie creuse (27) s'étendant de l'orifice de montage (21) jusqu'à un bord interne (76) de la portion coupante (23).

13. Dispositif de fauchage ou de broyage selon l'une quelconque des revendications 10 à 12, dans lequel la surface avant de chaque outil (2) de fauchage ou de broyage dudit couple d'outils de fauchage ou de broyage comprend un témoin d'usure (28) pour indiquer l'usure de l'outil (2) de fauchage ou de broyage, ledit un témoin d'usure (28) étant positionné proche de la portion coupante (23).
